# EUROPÄISCHE PATENTSCHRIFT

(11) **EP 1 690 759 B1**
(45) Veröffentlichungstag und Bekanntmachung des Hinweises auf die Patenterteilung: **21.05.2008**
(21) Anmeldenummer: 05026413.4
(22) Anmeldetag: 03.12.2005
(51) Int. Cl.: B60R 25/00, G07C 9/00

(54) **Verriegelungsvorrichtung für ein Fahrzeug und entsprechendes Verriegelungsverfahren**
Locking device for vehicle and corresponding locking method
Dispositif de verrouillage pour véhicule et méthode correspondante

(30) Priorität: 15.02.2005 DE 102005006698
(43) Veröffentlichungstag der Anmeldung: 16.08.2006
(73) Patentinhaber: Volkswagen Aktiengesellschaft, 38436 Wolfsburg (DE); Hella KGaA Hueck & Co., 59557 Lippstadt (DE)
(72) Erfinder: Grave, Dietmar, 38116 Braunschweig (DE); Wick, Christian, 38162 Cremlingen (DE); Grossmann, Markus, 38518 Gifhorn (DE); Schütte, Guido, 59555 Lippstadt (DE)

(56) Entgegenhaltungen:
- DE-A1- 4 240 426
- DE-A1- 19 839 350

## Beschreibung

Die vorliegende Erfindung betrifft eine Verriegelungsvorrichtung für ein Fahrzeug, die mit einem ID-Geber verriegelbar ist, mit einer Innenraumscaneinrichtung zum Erfassen eines ID-Geber im Innenraum des Fahrzeugs unter Bereitstellung eines Innenraumscansignals und einer Auswerteeinrichtung zur Aufnahme eines Verriegelungssignals für ein Verriegeln des Fahrzeugs und zum Erzeugen eines Steuersignals in Abhängigkeit von dem Innenraumscansignal. Darüber hinaus betrifft die vorliegende Erfindung ein entsprechendes Verfahren zum Ver-/Entriegeln eines Fahrzeugs.

Bekanntermaßen können Fahrzeuge berührungslos über Identifikationsgeber (ID-Geber) verriegelt, entriegelt bzw. betrieben werden. Hierzu stehen sogenannte Keyless-Entry-Systeme zur Verfügung. Ein solches System ist gemäß dem Oberbegriff des Anspruchs 1 aus DE 198 39 350 bekannt.

Ein derartiges Fahrzeug kann beispielsweise per Funkschuss, d. h. per Knopfdruck auf eine Fernbedienung, oder durch automatisierte Abfrage eines "Schlüssels" bzw. ID-Gebers ausgelöst durch einen Taster oder Sensor am Türgriff des Fahrzeugs verriegelt und entriegelt werden. Dabei besteht gründsätzlich die Gefahr, dass sich der Nutzer aus dem Fahrzeug ausschließt, wenn das Fahrzeug bei geöffneter Tür oder Heckklappe verriegelt wurde, der ID-Geber nachträglich in das Fahrzeug eingebracht wird und die entsprechende Tür oder Heckklappe anschließend zugeworfen wird. Darüber hinaus soll in der Regel vermieden werden, dass ein ID-Geber ungewollt im Innenraum des Fahrzeugs verbleibt. Daher wurden entsprechende Sicherheitssysteme entwickelt.

Wird beispielsweise das Fahrzeug extern durch einen Funkbefehl FFB oder eine Keyless-Aktion extern verriegelt, so wird der Innenraum des Fahrzeugs durch eine Innenraumantenne nach weiteren dort verbleibenden Schlüsseln bzw. ID-Gebern durchsucht. Wird mindestens ein ID-Geber im Innenraum entdeckt, so erfolgt eine Textanzeige im Kombünstrument: "Weiterer Schlüssel im Fahrzeug". Dies soll den Nutzer dazu veranlassen, einen ungewollt im Fahrzeug gelassenen ID-Geber aus Diebstahlschutzgründen zu entfernen.

Hinterlässt der Nutzer einen Schlüssel im Kofferraum, so wird dies bei einer Limousine zum sofortigen Entriegeln und Aufspringen des Kofferraums führen. Bei einem Fahrzeug mit stufenlosem Heck, z: B. Variant, bleibt die Freigabe des Hecktasters für eine definierte Zeit erhalten, damit der Schlüssel entnommen werden kann. In beiden Fällen erfolgt eine Positionsfeststellung des ID-Gebers im Kofferraum durch eine oder mehrere Kofferraumantennen.

Würde jedoch ein Nutzer bei einem extern verriegelten Fahrzeug mit offener Heckklappe ungewollt einen ID-Geber in den Fahrgastbereich bringen, so würde er beim Schließen der Heckklappe den ID-Geber im Fahrzeug einschließen. Dies ist beispielsweise dann der Fall, wenn bei einer Limousine, aber auch bei einem Variant, die Sitzbank umgeklappt ist und der ID-Geber beim Beladen des Fahrzeugs vom Kofferraum in den Fahrgastraum gebracht wird. Der ID-Geber befindet sich dann nicht mehr im Erfassungsbereicht der Kofferraumantenne und der Kofferraumdeckel wird dann nach seinem Zuwerfen nicht mehr automatisch entriegelt bzw. geöffnet.

Die Aufgabe der vorliegenden Erfindung besteht darin, zu vermeiden, dass bei der oben geschilderten Konstellation ein ID-Geber im Fahrzeug eingeschlossen wird und hierfür ein entsprechendes Verfahren sowie eine entsprechende Schließvorrichtung vorzuschlagen.

Erfindungsgemäß wird diese Aufgabe gelöst durch eine Verriegelungsvorrichtung für ein Fahrzeug, die mit einem ID-Geber entriegelbar ist, mit einer Innenraumscaneinrichtung zum Erfassen eines ID-Gebers im Innenraum des Fahrzeugs unter Bereitstellung eines Innenraumscansignals und einer Auswerteeinrichtung zur Aufnahme eines Verriegelungssignals für ein Verriegeln des Fahrzeugs und zum Erzeugen eines Steuersignals in Abhängigkeit von dem Innenraumscansignal, wobei ein Kofferraumdeckelsensor zur Erfassung des Schließzustands einer Heckklappe des Fahrzeugs und zur Bereitstellung eines Heckklappensignals mit der Auswerteeinrichtung verbunden ist und mit der Auswerteeinrichtung anhand des Innenraumscansignals, des Verriegelungssingals und des Heckklappensignals registrierbar ist, ob ein ID-Geber vor oder nach einem Verriegeln mindestens einer Öffnung des Fahrzeugs in den Innenraum des Fahrzeugs bei geöffneter Heckklappe gelangte, und das Steuersignal entsprechend generierbar ist.

Ferner ist erfindungsgemäß vorgesehen, ein Verfahren zum Ver-/Entriegeln eines Fahrzeugs, das mit einem ID-Geber entriegelbar ist, durch Scannen des Innenraums des Fahrzeugs nach einem ID-Geber und Bereitstellen eines entsprechenden Innenraumscansignals, Erfassen eines Verriegelungssignals für ein Verriegeln des Fahrzeugs und Erzeugen eines Steuersignals für eine Verriegelungseinrichtung in Abhängigkeit von dem Innenraumscansignal und dem Verriegelungssignal, sowie Erfassen des Schließzustands einer Heckklappe und Bereitstellen eines entsprechenden Heckklappensignals und Registrieren anhand des Innenraumscansignals und des Heckklappensignals, ob ein ID-Geber vor oder nach einem Schließen der Heckklappe in den Innenraum des Fahrzeugs gelangte, und entsprechendes Erzeugen des Steuersignals.

Erfindungsgemäß ist es somit möglich, festzustellen, ob der beim Verschließen der Heckklappe im Fahrzeug gefundene ID-Geber nach dem externen Verriegeln in das Fahrzeug gelangt ist, und entsprechend zu reagieren.

Entsprechend einer Weiterbildung der vorliegenden Erfindung besitzt die Verriegelungsvorrichtung eine Kofferraumscaneinrichtung zum Erfassen eines ID-Gebers im Kofferraum des Fahrzeugs und zur Bereitstellung eines entsprechenden Kofferraumscansignals, wobei ein von dem ID=Geber auf das Kofferraumscansignal hin ausgegebenes Gebersignal von der Auswerteeinrichtung zur Erzeugung des Steuersignals registrierbar ist. Dadurch kann klar festgestellt werden, in weichem Teil des Fahrzeugs sich der ID-Geber zu jedem Zeitpunkt befindet und insbesondere, ob der ID-Geber durch den Kofferraum in den Innenraum, d. h. den Fahrgastbereich, des Fahrzeugs gelangt ist.

Darüber hinaus kann die Verriegelungsvorrichtung mit einer Heckklappenverriegelungseinrichtung ausgestattet sein, weiche mit dem von der Auswerteeinrichtung erzeugbaren Steuersignal zum Entriegeln.ansteuerbar ist. Auf diese Weise lässt sich sicherstellen, dass der Kofferraumdeckel bzw. Heckklappendeckel auch dann entriegelt wird, wenn der ID-Geber durch den Kofferraum hindurch in den Irinenraum des Fahrzeugs gebracht wird. Das Fahrzeug reagiert somit in gleicher Weise unabhängig davon, ob sich der ID-Geber nun im Kofferraum oder im Innenraum des Fahrzeugs befindet.

Vorzugsweise kann von der Auswerteeinrichtung anhand des Innenraumscansignals und des Verriegelungssignals festgestellt werden, ob sich ein ID-Geber vor dem Verriegeln des Fahrzeugs im Innenraum des Fahrzeugs befand, und wenn dies der Fall ist, der ID-Geber von der Auswerteeinrichtung gesperrt bzw. für bestimmte Aktionen ignoriert werden. Auf diese Weise wird der Situation Rechnung getragen, dass sich ein erster ID-Geber unter Umständen bewusst,im Fahrzeug befindet, während das Fahrzeug von dem zweiten iD-Geber von außen verriegelt wird.

Günstigerweise wird der im Fahrzeug erfasste ID-Geber beim Verriegeln des Fahrzeugs , und/oder beim Schließen der Heckklappe an das Kombünstrument im Fahrzeug gemeldet und dort eine entsprechende Textmeldung zur Anzeige gebracht. Dies dient zur Erhöhung des Diebstahlschutzes.

Die vorliegende Erfindung wird nun anhand der beigefügten Zeichnung näher erläutert, die einen Zeitablauf manueller und automatischer Aktionen darstellt.

Die nachfolgend näher geschilderten Ausführungsbeispiele stellen bevorzugte Ausführungsformen der vorliegenden Erfindung dar.

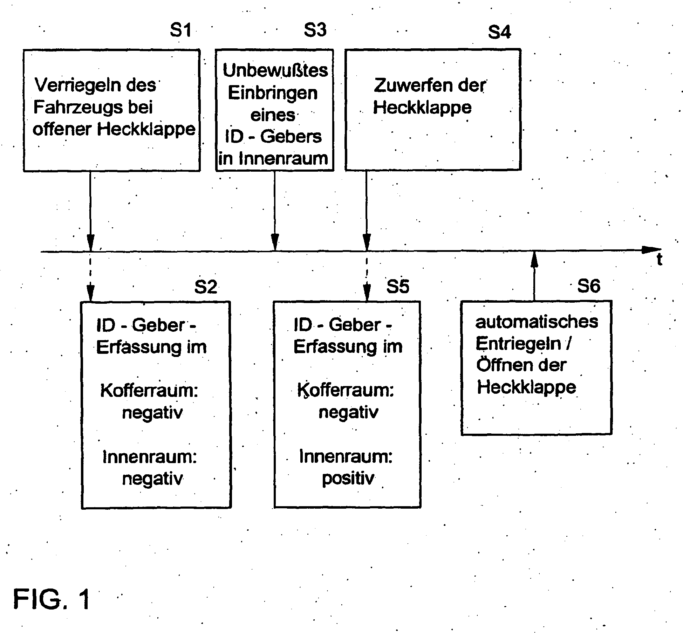

Entsprechend dem in Figur 1 dargestellten Beispiel verriegelt ein Fahrer sein Fahrzeug bei offener Heckklappe mit einem externen ID-Geber, wie dies in Figur 1 mit Schritt S1 symbolisiert ist. Ein gemäß Schritt S2 durchgeführter durch das Verriegeln ausgelöster Kofferraumscan führt zu keiner Erfassung eines ID-Gebers im Kofferraum. Auch im Innenraum des Fahrzeugs, d. h. im Fahrgastraum, wird ein Innenraumscan getriggert durch das externe Verriegeln durchgeführt und es wird kein ID-Geber dort festgestellt. Dabei wird über die Innenraumantennen ein Scansignal abgestrahlt, dessen Feldstärke von einem ID-Geber im Scanbereich für seine Position bewertet wird. Bei Überschreiten einer vorgegebenen Bewertungsschwelle kommuniziert der ID-Geber aktiv mit der Auswerteeinrichtung.

Daraufhin legt er diesen zum Verriegeln verwendeten ID-Geber gemäß Schritt S3 beispielsweise in einer Jackentasche in den Kofferraum. Der Fahrer lädt weitere Gegenstände in den Kofferraum und schiebt dabei seine Jacke mit dem ID-Geber aus dem Scanbereich der Kofferraumantenne in den Scanbereich der Innenraumantenne für den Innenraumscan. Anschließend wirft der Fahrer entsprechend Schritt S4 die Heckklappe zu und stößt damit erneut einen Innenraum- und Kofferraumscan an. Der Kofferraumscan nach einem ID-Geber fällt in diesem Beispiel negativ und der Innenraumscan gemäß Schritt S5 positiv aus. Bekannte Systeme würden aufgrund des negativen Kofferraumscans den Kofferraumdeckel bzw. die Heckklappe nicht automatisch entriegeln oder öffnen, nachdem die Heckklappe entsprechend Schritt S4 zugeworfen wurde.

Erfindungsgemäß wurde jedoch der zeitliche Ablauf registriert, dass nach dem Verriegelri des Fahrzeugs bei offener Heckklappe (Schritt S1) ein ID-Geber in den Innenraum gelangt ist (Schritt S3), nachdem sich dieser ID-Geber zunächst nicht im Innenraum befand (Schritt S2). Dies wird von einer Auswerteeinrichtung als Indiz dafür interpretiert, dass sich der Fahrer nach dem Zuwerfen der Heckklappe (Schritt S4) aus dem Fahrzeug ausgeschlossen hat. Demzufolge wird gemäß Schritt S6 die Heckklappe automatisch entriegelt und gegebenenfalls auch geöffnet bzw. die Freigabe hierzu erteilt. ,

Im Folgenden wird ein weiteres Szenario geschildert, bei dem die erfindungsgemäße Verriegelungsvorrichtung bzw. das erfindungsgemäße Verfahren eingesetzt wird: Es liegt bereits ein erster ID-Geber im vorderen Bereich des Fahrzeugs. Der Nutzer verlässt das Fahrzeug und verriegelt es bei offener Heckklappe und z. B. bei offener Tür hinten links mit einem zweiten ID-Geber (Keyless/Funk). Das System stellt beim Innenraumscan den ersten ID-Geber im Innerraum fest, merkt sich bzw. sperrt diesen für bestimmte Keyless-Aktionen und gibt eine Meldung über das Kombünstrument ab ("Weiterer Schlüssel im Fahrzeug"). Das System weiß zu diesem Zeitpunkt außerdem, dass die Heckklappe offen ist, und registriert; dass der erste ID-Geber bereits vor dem kompletten Verriegeln des Fahrzeugs in den Innenraum gebracht wurde. Dieser erste ID-Geber bzw. Schlüssel wird - wenn er im Bereich der Innenraumantenne für den Innenraumscan verbleibt - beim Schließen der Heckklappe durch das Kombiinstrument zwar gemeldet ("Weiterer Schlüssel im Fahrzeug"), jedoch wird er nicht mehr zum Entriegeln/Öffnen bzw. Freigabe der Heckklappe führen, da er passiviert bzw. gesperrt ist.

Würde der erste ID-Geber entsprechend einer Aktionsalternative a durch die noch offene Tür wieder aus dem Fahrzeug genommen und die Tür zugeworfen werden, so wird bei einem erneuten Innenraumscan der erste ID-Geber bzw. Schlüssel nicht gefunden und somit auch keine Meldung abgegeben werden.

Entsprechend einer Aktionsalternative b verbleibt der erste ID-Geper im Fahrzeug und die Tür wird verschlossen. In diesem Fall wird, wie oben bereits geschildert, nach dem Schließen der Heckklappe zwar ein weiterer Schlüssel im Fahrzeug gemeldet, aber die Heckklappe bleibt verriegelt.

Ein weiteres Szenario kann sich dadurch ergeben, dass unabhängig davon, ob sich vor dem Verriegeln ein ID-Geber bereits im Fahrzeuginnenraum befindet, durch die geöffnete Heckklappe ein beliebiger ID-Geber (kann auch der erste ID-Geber sein) in den Kofferraum gebracht und die Heckklappe entsprechend einer Aktionsalternative c geschlossen wird. Als Reaktion darauf wird das System den Kofferraum entriegeln bzw. öffnen oder freigeben, wie dies aus dem Stand der Technik bekannt ist.

Bei einer Aktionsalternative d wird durch die geöffnete Heckklappe mindestens ein ID-Geber in den Detektionsbereich der Innenraumantenne und somit außerhalb des Detektionsbereichs der Kofferraumantänne(n) gebracht und die Heckklappe geschlossen. Erfindungsgemäß reagiert das System damit, dass der mindestens eine ID-Geber als seit dem externen Verriegeln, dem Schließen der Tür bzw. dem Ausführen einer Komfortschließfunktion "in das Fahrzeug neu eingebracht" erkannt wird. Daraufhin verhält sich das System wie bei einem ID-Geber im Kofferraum und entriegelt oder öffnet diesen bzw. gibt den Kofferraum frei.

Eine vereinfachte Variante des erfindungsgemäßen Systems könnte darin bestehen, dass bei einem im extern verriegelten Fahrzeug liegenden ID-Geber unabhängig von seiner tatsächlichen Position beim Schließen der Heckklappe reagiert wird, als ob der ID-Geber im Kofferraum läge. Auch wenn der ID-Geber z. B. nur im vorderen Bereich des Fahrzeugs liegt und dies bereits beim externen Verriegeln des Fahrzeugs der Fall war, wird die Heckklappe entriegelt.

Wenn ein weiterer gültiger ID-Geber im Außenbereich des Fahrzeugs oder alternativ nur im Außenbereich des Hecks identifiziert wird, besteht auch die Möglichkeit, nicht auf im Fahrzeug eingeschlossene ID-Geber in der oben beschriebenen Weise zu reagieren.

### Bezugszeichenliste

- S1: Verriegeln des Fahrzeugs bei offener Heckklappe
- S2: ID-Geber-Erfassung im Kofferraum: negativ Innenraum: negativ
- S3: unbewusstes Einbringen eines ID-Gebers im Innenraum
- S4: Zuwerfen der Heckklappe
- $5: ID-Geber-Erfassung im Kofferraum: negativ Innenraum: positiv
- S6: automatisches Entriegeln/Offnen der Heckklappe

## Patentansprüche

1. Verriegelungsvorrichtung für ein Fahrzeug, die mit einem ID-Geber entriegelbar ist, mit
- einer Innenraumscaneinrichtung zum Erfassen eines ID-Gebers (S2. S3) im Innenraum des Fahrzeugs unter Bereitstellung eines Innenraumscansignals und
- einer Auswerteeinrichtung zur Aufnahme eines Verrieigelungssignals für ein Verriegeln des Fahrzeugs (S1) und zum Erzeugen eines Steuersignals in Abhängigkeit von dem Innenraumscansignal,
**dadurch gekennzeichnet, dass**
- ein Kofferraumdeckelsensor zur Erfassung des Schließzustands einer Heckklappe des Fahrzeugs und zur Bereitstellung eines Heckklappensignals mit der Auswerteeinrichtung verbunden ist und
- mit der Auswerteeinrichtung anhand des Innenraumscansignals, des Verriegelungssignals und des Heckklappensignals registriert wird, ob ein ID-Geber vor oder nach einem Verriegeln mindestens einer Öffnung des Fahrzeugs in den Innenraum des Fahrzeugs bei geöffneter Heckklappe gelangte, und das Steuersignal entsprechend generiert wird.

2. Verriegelungsvorrichtung nach Anspruch 1. die eine Kofferraumscaneinnchtung zum Erfassen eines ID-Gebers (S2, S3) im Kofferraum des Fahrzeugs und zur Bereitstellung eines entsprechenden Kofferraumscansignals umfasst, wobei ein von dem ID-Geber auf das Kofferraumscansignal hin ausgegebenes Gebersignal von der Auswerteeinrichtung zur Erzeugung des Steuersignals registrierbar ist.

3. Verriegelungsvorrichtung nach Anspruch 1 oder 2, die über eine Heckklappenverriegelungseinrichtung verfügt, welche mit dem von der Auswerteeinrichtung erzeugbaren Steuersignal zum Entriegeln (S5) ansteuerbar ist.

4. Verriegelungsvorrichtung nach einer der vorhergehenden Ansprüche, wobei von der Auswerteeinrichtung anhand des Innenraumscansignals und des Heckklappensignals feststellbar ist, ob sich ein ID-Geber vor dem Schließen der Heckklappe im Innenraum des Fahrzeugs befand, und, wenn dies der Fall ist, der ID-Geber von der Auswerteeinrichtung sperrbar oder ignorierbar ist.

5. Verfahren zum Ver-/Entriegeln eines Fahrzeug, das mit einem ID-Geber entriegelbar ist, durch
- Scannen (S2, S3) des Innenraums des Fahrzeugs nach einem ID-Geber und Bereitstellen eines entsprechenden Innenraumscansignals,
- Erfassen eines Verriegelungssignals für ein Verriegeln (S1) des Fahrzeugs und
- Erzeugen (S5) eines Steuersignals für eine Verriegelungseinrichtung in Abhängigkeit von dem lnnenraumscansignal und dem Verriegelungssignal,
**gekennzeichnet, durch**
- Erfassen des Schließzustands einer Heckklappe (S4) und Bereitstellen eines entsprechenden Heckklappensignals und
- Registrieren anhand des lnnenraumscansignals, des Verriegelungssignals und des Heckklappensignals, ob ein ID-Gebet vor oder nach einem Verriegeln mindestens einer Öffnung des Fahrzeugs bei geöffneter Heckklappe in den Innenraum des Fahrzeugs gelangte, und entsprechendes Erzeugen des Steuersignals (S5).

6. Verfahren nach Anspruch 5 mit dem weiteren Schritt des Scannens des Kofferraums des Fahrzeugs nach einem ID-Geber und Bereitstellen eines entsprechenden Kofferraumsscansignals, so dass das Steuersignal für die Verriegelungseinrichtung auch in Abhängigkeit von dem Kofferraumscansignal erzeugt wird.

7. Verfahren nach Anspruch 5 oder 6, wobei die Heckklappe geöffnet wird, wenn sie verschlossen wurde, nachdem ein ID-Geber bei geöffneter Heckklappe in den Innenraum des Fahrzeugs gelangt ist.

8. Verfahren nach einem der Ansprüche 5 bis 7, wobei ein erster ID-Geber, der sich vor dem Verriegeln des Fahrzeugs mit einem zweiten ID-Geber bereits im Innenraum des Fahrzeugs befand, so dass der bei geschlossener Heckklappe nicht zu deren Entriegelung und/oder Öffnung führt.

9. Verfahren nach Anspruch 8, wobei der erste ID-Geber einem Kombiinstrument des Fahrzeugs gemeldet wird.

## Claims

1. Locking device for a vehicle which can be unlocked with an ID signal transmitter, having
- a passenger compartment scanning device for sensing an ID signal transmitter (S2, S3) in the passenger compartment of the vehicle by providing a passenger compartment scanning signal and
- an evaluation device for picking up a locking signal for locking the vehicle (S1) and for generating a control signal as a function of the passenger compartment scanning signal,
**characterized in that**
- a boot lid sensor for sensing the closed state of a tailgate of the vehicle and for making available a tailgate signal is connected to the evaluation device and
- the evaluation device is used to register, by means of the passenger compartment scanning signal, the locking signal and the tailgate signal, whether an ID signal transmitter is placed in the passenger compartment of the vehicle with the tailgate opened before or after locking of at least one opening of the vehicle, and the control signal is correspondingly generated.

2. Locking device according to Claim 1, which comprises a boot scanning device for sensing an ID signal transmitter (S2, S3) in the boot of the vehicle and for making available a corresponding boot scanning signal, wherein a signal transmitter signal which has been output by the ID signal transmitter in response to the boot scanning signal can be registered by the evaluation device in order to generate the control signal.

3. Locking device according to Claim 1 or 2, which has a tailgate locking device which can be actuated, for the purpose of unlocking (S5), with the control signal which can be generated by the evaluation device.

4. Locking device according to one of the preceding claims, wherein it is possible to use the evaluation device to determine, by means of the passenger compartment scanning signal and the tailgate signal, whether an ID signal transmitter was located in the passenger compartment of the vehicle before the tailgate was closed, and if this is the case the ID signal transmitter can be disabled or ignored by the evaluation device.

5. Method for locking/unlocking a vehicle which can be unlocked with an ID signal transmitter, by
- scanning (S2, S3) the passenger compartment of the vehicle for an ID signal transmitter and making available a corresponding passenger compartment scanning signal,
- sensing a locking signal for locking (S1) the vehicle and
- generating (S5) a control signal for a locking device as a function of the passenger compartment scanning signal and the locking signal,
**characterized by**
- sensing the closed state of a tailgate (S4) and making available a corresponding tailgate signal, and
- registering, by means of the passenger compartment scanning signal, the locking signal and the tailgate signal, whether an ID signal transmitter was placed in the passenger compartment of the vehicle before or after locking of at least one opening of the vehicle with the tailgate opened, and corresponding generation of the control signal (S5).

6. Method according to Claim 5, with the further step of scanning of the passenger compartment of the vehicle for an ID signal transmitter and making available a corresponding passenger compartment scanning signal so that the control signal for the locking device is also generated as a function of the boot scanning signal.

7. Method according to Claim 5 or 6, wherein the tailgate is opened if it has been closed after an ID signal transmitter has been placed in the passenger compartment of the vehicle with the tailgate opened.

8. Method according to one of Claims 5 to 7, wherein a first ID signal transmitter which was already located in the passenger compartment of the vehicle before the locking of the vehicle with a second ID signal transmitter is such that it does not bring about unlocking and/or opening of the tailgate when said tailgate is closed.

9. Method according to Claim 8, wherein the first ID signal transmitter is registered with a combination instrument of the vehicle.

## Revendications

1. Dispositif de verrouillage pour un véhicule pouvant être déverrouillé avec un générateur d'identifiant, comprenant
- un dispositif de balayage de l'habitacle destiné à détecter un générateur d'identifiant (S2, S3) dans l'habitacle du véhicule en fournissant un signal de balayage d'habitacle et
- un dispositif d'interprétation pour acquérir un signal de verrouillage pour un verrouillage du véhicule (S1) et pour générer un signal de commande en fonction du signal de balayage d'habitacle,
**caractérisé en ce que**
- un détecteur de capot de coffre destiné à détecter l'état fermé d'un hayon du véhicule et à fournir un signal de hayon est relié avec le dispositif d'interprétation et
- le dispositif d'interprétation sert à enregistrer, à l'aide du signal de balayage d'habitacle, du signal de verrouillage et du signal de hayon, si un générateur d'identifiant a pénétré dans l'habitacle du véhicule avec le hayon ouvert avant ou après un verrouillage d'au moins une ouverture du véhicule et à générer le signal de commande en conséquence.

2. Dispositif de verrouillage selon la revendication 1, lequel comprend un dispositif de balayage de coffre destiné à détecter un générateur d'identifiant (S2, S3) dans le coffre du véhicule et à délivrer un signal de balayage de coffre correspondant, un signal de générateur délivré par le générateur d'identifiant en présence du signal de balayage de coffre pouvant être enregistré par le dispositif d'interprétation en vue de générer le signal de commande.

3. Dispositif de verrouillage selon la revendication 1 ou 2, lequel dispose d'un dispositif de verrouillage du hayon qui peut être commandé en vue de son déverrouillage (S5) par le signal de commande pouvant être généré par le dispositif d'interprétation.

4. Dispositif de verrouillage selon l'une des revendications précédentes, le dispositif d'interprétation pouvant déterminer au moyen du signal de balayage d'habitacle et du signal de hayon si un générateur d'identifiant se trouvait dans l'habitacle du véhicule avant la fermeture du hayon et, si c'est le cas, le générateur d'identifiant peut être bloqué ou ignoré par le dispositif d'interprétation.

5. Procédé pour verrouiller/déverrouiller un véhicule pouvant être déverrouillé avec un générateur d'identifiant en
- balayant (S2, S3) l'habitacle du véhicule à la recherche d'un générateur d'identifiant et en fournissant un signal de balayage d'habitacle correspondant,
- détectant un signal de verrouillage pour un verrouillage (S1) du véhicule et
- générant (S5) un signal de commande pour un dispositif de verrouillage en fonction du signal de balayage d'habitacle et du signal de verrouillage,
**caractérisé par**
- la détection de l'état fermé d'un hayon (S4) et la fourniture d'un signal de hayon correspondant et
- l'enregistrement, à l'aide du signal de balayage d'habitacle, du signal de verrouillage et du signal de hayon, de la pénétration d'un générateur d'identifiant dans l'habitacle du véhicule avec le hayon ouvert avant ou après un verrouillage d'au moins une ouverture du véhicule et la génération en conséquence du signal de commande (S5).

6. Procédé selon la revendication 5, comprenant l'étape supplémentaire de balayage du coffre du véhicule à la recherche d'un générateur d'identifiant et fourniture d'un signal de balayage de coffre correspondant de sorte que le signal de commande pour le dispositif de verrouillage puisse également être généré en fonction du signal de balayage de coffre.

7. Procédé selon la revendication 5 ou 6, le hayon étant ouvert s'il a été fermé après qu'un générateur d'identifiant a pénétré dans l'habitacle du véhicule avec le hayon ouvert.

8. Procédé selon l'une des revendications 5 à 7, un premier générateur d'identifiant qui se trouvait déjà dans l'habitacle du véhicule avec un deuxième générateur d'identifiant avant le verrouillage du véhicule ne provoque pas le déverrouillage et/ou l'ouverture du hayon lorsque celui-ci est fermé.

9. Procédé selon la revendication 8, le premier générateur d'identifiant étant signalé à un instrument combiné du véhicule.
